# EUROPÄISCHE PATENTANMELDUNG

(11) **EP 0 918 237 A1**
(43) Veröffentlichungstag der Anmeldung: **26.05.1999**
(21) Anmeldenummer: 98113733.4
(22) Anmeldetag: 23.07.1998
(51) Int. Cl.: G02B 6/26, G02B 6/32, G02B 6/293, G02B 6/42

(54) **Optisches Bauelement**

(30) Priorität: 21.11.1997 DE 19751650
(71) Anmelder: ROBERT BOSCH GMBH, 70442 Stuttgart (DE)
(72) Erfinder: Spatscheck, Thomas, Dipl.-Ing. (FH), 74535 Mainhardt (DE)

(57) **Zusammenfassung**

Die Erfindung betrifft ein optisches Bauelement zur Kopplung von wenigstens zwei passiven und/oder aktiven optischen Elementen, wobei die Elemente in einem gemeinsamen Substrat positioniert sind, und deren optische Achsen derart zueinander ausgerichtet sind, daß ein optisches Signal zwischen den Elementen übertragbar ist.

Es ist vorgesehen, daß die Elemente (12, 14, 48) über eine Fokusiereinrichtung gekoppelt sind.

## Beschreibung

Die Erfindung betrifft ein optisches Bauelement zur Kopplung von wenigstens zwei passiven und/oder aktiven optischen Elementen mit den im Oberbegriff des Anspruchs 1 genannten Merkmalen.

### Stand der Technik

Optische Bauelemente der gattungsgemäßen Art sind bekannt. Diese dienen beispielsweise als Transceiver zur Kopplung von zwei Lichtwellenleitern, wobei ein von einem der Lichtwellenleiter übertragenes optisches Signal von dem anderen Lichtwellenleiter übernommen werden soll. Die Kopplung der optischen Elemente erfolgt dadurch, daß deren optischen Achsen derart zueinander ausgerichtet sind, daß ein optisches Signal zwischen den Elementen übertragbar ist. Bei den bekannten optischen Bauelementen ist nachteilig, daß bei der Übertragung der optischen Signale eine relativ hohe Durchgangsdämpfung, von beispielsweise 2 bis 3 dB auftritt, die zu einer Schwächung des Signalpegels führt. Zur Verringerung der Dämpfung ist bekannt, die zu koppelnden Enden von Lichtwellenleitern anzuspitzen, um den Abstand der gegenüberliegenden Lichtaustritts- beziehungsweise Lichteintrittsflächen der Lichtwellenleiter zu verkleinern. Das Herstellen von angespitzten Glasfasern ist jedoch aufwendig und teuer.

### Vorteile der Erfindung

Das erfindungsgemäße optische Bauelement mit den im Anspruch 1 genannten Merkmalen bietet demgegenüber Vorteil, daß in einfacher Weise eine Kopplung von passiven und/oder aktiven optischen Elementen erfolgen kann, wobei eine Durchgangsdämpfung auf ein Minimum reduziert ist. Dadurch, daß die optischen Elemente über eine Fokusiereinrichtung gekoppelt sind, läßt sich eine Streuung der zu übertragenen optischen Signale während ihres Überganges zwischen den optischen Elementen auf ein Minimum reduzieren. Hierdurch wird die Durchgangsdämpfung des optischen Bauelementes auf ein Minimum, von beispielsweise <0,5 dB reduziert.

In bevorzugter Ausgestaltung der Erfindung ist vorgesehen, daß die Fokusiereinrichtung ein in das Bauelement integriertes passives optisches Element, insbesondere ein Hohlspiegel, ist. Hierdurch läßt sich mittels einfacher, exakt und reproduzierbar herstellbarer passiver optischer Elemente die Fokusierung der zu übertragenden optischen Signale erzielen. Insbesondere durch die Ausgestaltung als passives optisches Element ist dieses in einfacher Weise mittels an sich bekannter Verfahren der Strukturierung optischer Elemente in Silizium-Substraten hochpräzise erzielbar.

In weiterer bevorzugter Ausgestaltung der Erfindung ist vorgesehen, daß in den Strahlengang zwischen den optischen Elementen ein wellenlängenselektives Filter, das vorzugsweise von der Fokusiereinrichtung gebildet ist, angeordnet ist. Hierdurch läßt sich das optische Bauelement neben der Kopplung von wenigstens zwei passiven und/oder aktiven optischen Elementen zum Ein- beziehungsweise Auskoppeln optischer Signale aus beziehungsweise in den Übertragungsweg einsetzen.

Weitere bevorzugte Ausgestaltungen der Erfindung ergeben sich aus den übrigen, in den Unteransprüchen genannten Merkmalen.

### Zeichnungen

Die Erfindung wird nachfolgend in Ausführungsbeispiel anhand der zugehörigen Zeichnungen näher erläutert. Es zeigen:
- Figur 1: eine schematische Schnittdarstellung eines optischen Bauelementes in einer ersten Ausführungsvariante;
- Figur 2: eine schematische Schnittdarstellung eines optischen Bauelementes in einer zweiten Ausführungsvariante und
- Figur 3: eine schematische Schnittdarstellung eines optischen Bauelementes in einer dritten Ausführungsvariante.

### Beschreibung der Ausführungsbeispiele

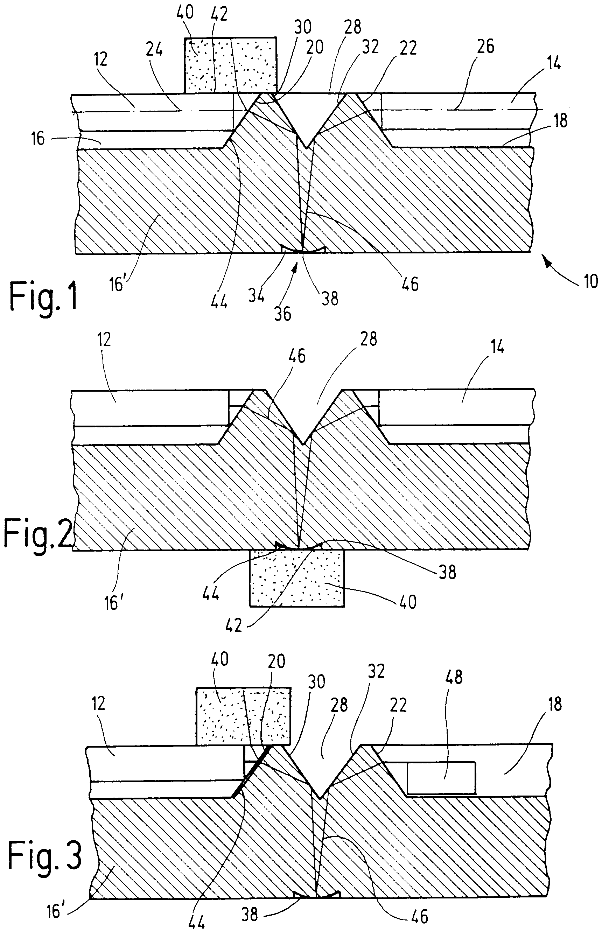

Figur 1 zeigt ein optisches Bauelement 10, mittels dem ein erster Lichtwellenleiter 12 mit einem zweiten Lichtwellenleiter 14 gekoppelt werden soll. Die Lichtwellenleiter 12 und 14 sind beispielsweise Glasfasern. Das optische Bauelement 10 besteht aus einem Grundkörper 16', der bekanntermaßen aus einem Silizium-Substrat besteht. In dem Silizium-Substrat werden Aufnahmen 16 beziehungsweise 18 für die Lichtwellenleiter 12 beziehungsweise 14 erzeugt. Bekanntermaßen werden die Aufnahmen 16 und 18 als V-Nuten geätzt, so daß die einen runden Querschnitt aufweisenden Lichtwellenleiter 12 und 14 in eine definierte Position bringbar sind. Das Ätzen der v-förmigen Aufnahmen 16 und 18 erfolgt durch einen Ätzangriff von der Oberseite des Grundkörpers 16', wobei entlang der 111-Kristallebenen des Silizium-Substrates die v-förmigen Ausnehmungen 16 und 18 entstehen. Gleichzeitig entstehen durch das Ätzen der Ausnehmungen 16 und 18 Stirnflächen 20 beziehungsweise 22 der Ausnehmungen 16 und 18, die unter einem definierten, der Kristallebene des Grundsubstrates 16' entsprechenden Winkel verlaufen. Durch Einlegen der Lichtwellenleiter 12 und 14 in die Ausnehmungen 16 und 18 können diese bis an die Stirnflächen 20 beziehungsweise 22 herangeführt werden, so daß die hier lediglich angedeuteten optischen Achsen 24 beziehungsweise 26 der Lichtwellenleiter 12 beziehungsweise 14 in einen exakt definierbaren Winkel auf die Stirnflächen 20 beziehungsweise 22 auftreffen.

Zwischen den Ausnehmungen 16 und 18 ist eine v-förmige Vertiefung 28 strukturiert, deren den Stirnflächen 20 beziehungsweise 22 gegenüberliegende Stirnflächen 28 beziehungsweise 30 ebenfalls unter einem durch die Kristallebene des Silizium-Substrates 16' bestimmten Winkel verlaufen. Entsprechend der bei der Strukturierung der Ausnehmungen 16 und 18 beziehungsweise 28 verwendeten Ätzmaskierung besitzen die Stirnflächen 20 und 30 beziehungsweise 22 und 32 einen definierten Abstand zueinander, wobei diese unter gleichem, entgegengesetzten Winkel verlaufen.

An der der Ausnehmung 28 gegenüberliegenden Seite des Grundkörpers 16' ist ein Kugelausschnitt 34 strukturiert, der als passives optisches Element 36 einen Hohlspiegel 38 ausbildet. Der Hohlspiegel 38 ist so angeordnet, daß ein gedachter Mittelpunkt des Kugelausschnittes 34 auf einer gedachten Senkrechten liegt, die durch den Schnittpunkt der Stirnflächen 30 und 32 der Ausnehmung 28 läuft.

Das optische Bauelement 10 ist zusätzlich mit einer Fotodiode 40 versehen, deren lichtempfindliche Seite 42 im Bereich der Stirnfläche 20 angeordnet ist. Die Stirnfläche 20 ist hier mit einem lediglich angedeuteten wellenlängenselektiven Filter 44, beispielsweise in Form einer Beschichtung, versehen.

Das in Figur 1 gezeigte Bauelement 10 zeigt folgende Funktion:

Ein über den Lichtwellenleiter 12 übertragenes optisches Signal trifft entsprechend der Ausrichtung der optischen Achse 24 auf die Stirnfläche 20. Durch das dort angeordnete wellenlängenselektive Filter 44 werden optische Signale bestimmter, entsprechend der Auswahl des Filters gegebener Wellenlängen in das Silizium-Substrat 16' eingespeist, während optische Signale anderer Wellenlängen, wiederum entsprechend der Auswahl des Filters 44, gespiegelt und von der Fotodiode 40 empfangen und einer weiteren Auswertung zuführbar sind.

Die in das Silizium-Substrat 16' eingestrahlten Signale werden entsprechend eines hier angedeuteten Strahlenganges 46 übertragen. Durch Eintritt der optischen Signale in das Silizium-Substrat 16' erfahren diese entsprechend eines Brechungsindex des Silizium-Substrates 16' eine Auslenkung, so daß diese unter einem von der optischen Achse 24 des Lichtwellenleiters 12 abweichenden Winkel auf die Stirnfläche 30 der Ausnehmung 28 treffen. Entsprechend der Gesetze der Optik, werden die dort auftreffenden Signale gespiegelt, wobei Einfallswinkel gleich Ausfallswinkel ist, so daß die Signale auf den Hohlspiegel 38 treffen, und von diesen wiederum entsprechend des Einfallswinkels reflektiert werden. Die so reflektierten Signale treffen auf die Stirnfläche 32, werden von dieser entsprechend des Einfallswinkels reflektiert und auf die Stirnfläche 22 umgelenkt. Dort ergibt sich entsprechend des Brechungsindexunterschiedes zwischen dem Substrat 16' und dem in der Ausnehmung 16 vorhandenen Medium (Luft oder ein anderes geeignetes Lichtleitmedium) eine Umlenkung der optischen Signale derart, daß diese exakt auf der optischen Achse 26 des Lichtwellenleiters 14 in diesen eingespeist werden. Somit kann mit einer einfachen, mittels bekannter Verfahrensschritte herstellbaren Anordnung eine Fokusierung des über den Lichtwellenleiter 12 gesendeten optischen Signales auf die optische Achse 26 des Lichtwellenleiters 14 erfolgen. Durch diese, in das Bauelement 10 integrierte, hochpräzise Fokusierung wird eine niedrige Durchgangsdämpfung der zu übertragenden optischen Signale von beispielsweise <0,5 dB erreicht.

Figur 2 zeigt eine weitere Ausführungsvariante, bei der gleiche Teile wie in Figur 1 mit gleichen Bezugszeichen versehen und nicht nochmals erläutert sind. Hinsichtlich der Kopplung der Lichtwellenleiter 12 und 14 ergibt sich gegenüber dem Ausführungsbeispiel in Figur 1 kein Unterschied, so daß insofern auf die dortige Beschreibung verwiesen wird. Im Unterschied ist jedoch die Fotodiode 40 nicht im Bereich der Stirnfläche 20 sondern an der Rückseite des Hohlspiegels 38 angeordnet, wobei die lichtempfindliche Seite 42 der Fotodiode 40 dem Hohlspiegel 38 zugewandt ist. Das wellenlängenselektive Filter 44 ist hierbei auf der Spiegelfläche des Hohlspiegels 38 ausgebildet. Die entsprechend des Strahlenganges 46 übertragenden optischen Signale treffen auf den Hohlspiegel 38, wobei entsprechend der Ausbildung des Filters 44 Signale bestimmter Wellenlängen reflektiert und nach Ablenkung an der Stirnfläche 32 in den Lichtwellenleiter 14 eingespeist werden. Nicht dieser definierten Wellenlänge entsprechende Signale werden von dem Hohlspiegel 38 durchgelassen und treffen auf die Fotodiode 40 und können so einer Auswertung beziehungsweise Bearbeitung zugeführt werden.

Schließlich ist in Figur 3 ein weiteres Ausführungsbeispiel gezeigt, bei dem verdeutlicht wird, daß neben der Kopplung von passiven optischen Elementen, den Lichtwellenleitern 12 und 14 gemäß Figur 1 und 2, über die in das Bauelement 10 integrierte Fokusierungsoptik auch aktive optische Elemente mit einem passiven optischen Element koppelbar sind. Hierzu ist anstelle des Lichtwellenleiters 14 eine Laserdiode 48 vorgesehen, die in einer Ausnehmung 18, die hier beispielsweise als geätzte Wanne ausgebildet ist, angeordnet wird. Somit können beispielsweise mittels der Laserdiode 48 generierte optische Signale über den Hohlspiegel 38 auf die optische Achse des Lichtwellenleiters 12 fokusiert werden. Hinsichtlich dem Aufbau und der Wirkungsweise der integrierten Fokusierung über den Hohlspiegel 38 und die entsprechende Ablenkung der Signale über die Stirnflächen 20, 22, 30 beziehungsweise 32 wird auf die Beschreibung zu den vorhergehenden Figuren verwiesen.

Es ist prinzipiell egal, ob die lichtempfindliche Fläche 42 der Fotodiode 40 oben oder unten ist, da die Fotodiode bei den verwendeten Lichtwellenlängen durchsichtig ist. Deshalb ist die Orientierung der Fotodiode nicht wichtig. Je nach Fotodioden-Typ und Montagetechnik kann es nach weiteren Ausführungsbeispielen notwendig sein, die Fotodiode so zu montieren, daß sie durchstrahlt werden muß. Die lichtempfindliche Fläche 42 ist dann nicht dem Bauelement 10 zugeordnet.

## Patentansprüche

1. Optisches Bauelement zur Kopplung von wenigstens zwei passiven und/oder aktiven optischen Elementen, wobei die Elemente in einem gemeinsamen Substrat positioniert sind, und deren optische Achsen derart zueinander ausgerichtet sind, daß ein optisches Signal zwischen den Elementen übertragbar ist, **dadurch gekennzeichnet**, daß die Elemente (12, 14, 48) über eine Fokusiereinrichtung gekoppelt sind.

2. Optisches Bauelement nach Anspruch 1, **dadurch gekennzeichnet**, daß die Fokusiereinrichtung ein in das Substrat (16') integriertes passives optisches Element (36) ist.

3. Optisches Bauelement nach einem der vorhergehenden Ansprüche, **dadurch gekennzeichnet**, daß die Fokusiereinrichtung ein Hohlspiegel (38) ist.

4. Optisches Bauelement nach einem der vorhergehenden Ansprüche, **dadurch gekennzeichnet**, daß in einem Strahlengang (46) zwischen den optischen Elementen (12, 14, 48) ein wellenlängenselektives Filter (44) angeordnet ist.

5. Optisches Bauelement nach einem der vorhergehenden Ansprüche, **dadurch gekennzeichnet**, daß die optischen Elemente (12, 14) Lichtwellenleiter (12, 14) sind, die in v-förmige Aufnahmen (16, 18) mit aufeinander ausgerichteten optischen Achsen (24, 26) angeordnet sind.

6. Optisches Bauelement nach einem der vorhergehenden Ansprüche, **dadurch gekennzeichnet**, daß unter einem Winkel zu den optischen Achsen (24, 26) verlaufende Stirnflächen (20, 22) die optischen Signale beim Übergang in das Substrat (16') brechen.

7. Optisches Bauelement nach einem der vorhergehenden Ansprüche, **dadurch gekennzeichnet**, daß die optischen Signale vor beziehungsweise nach Auftreffen auf den Hohlspiegel (38) zwischengespiegelt werden.

8. Optisches Bauelement nach einem der vorhergehenden Ansprüche, **dadurch gekennzeichnet**, daß zwischen den Aufnahmen (16, 18) eine v-förmige Vertiefung (28) strukturiert ist, deren Stirnflächen (30, 32) unter gleichgroßen, jedoch entgegengesetzten Winkeln - bezogen auf die optischen Achsen (24, 26) - zu den Stirnflächen (20, 22) verlaufen, und die Stirnflächen (30, 32) der Zwischenspiegelung dienen.

9. Optisches Bauelement nach einem der vorhergehenden Ansprüche, **dadurch gekennzeichnet**, daß eine durch einen Schnittpunkt der Stirnflächen (30, 32) verlaufende Senkrechte zu den optischen Achsen (24, 26) durch einen Mittelpunkt des Hohlspiegels (38) verläuft.

10. Optisches Bauelement nach einem der vorhergehenden Ansprüche, **dadurch gekennzeichnet**, daß das Filter (44) auf einer der Stirnflächen (20, 22) ausgebildet ist.

11. Optisches Bauelement nach einem der vorhergehenden Ansprüche, **dadurch gekennzeichnet**, daß das Filter (44) auf dem Hohlspiegel (38) ausgebildet ist.
